# EUROPEAN PATENT SPECIFICATION

(11) **EP 4 574 598 B1**
(45) Date of publication and mention of the grant of the patent: **28.10.2026**
(21) Application number: 23219479.5
(22) Date of filing: 21.12.2023
(51) Int. Cl.: B60T 17/22, B61L 15/00, F16D 66/00

(54) **CONTROL SYSTEM AND METHOD FOR RAILWAY VEHICLE FOR COUNTERACTING BRAKING RELATED COMPONENT DAMAGE**
STEUERSYSTEM UND VERFAHREN FÜR EIN SCHIENENFAHRZEUG ZUR BEKÄMPFUNG VON BREMSBEDINGTEN KOMPONENTENSCHÄDEN
SYSTÈME ET PROCÉDÉ DE COMMANDE POUR VÉHICULE FERROVIAIRE POUR LUTTER CONTRE LES DOMMAGES DES COMPOSANTS DUS AU FREINAGE

(43) Date of publication of application: 25.06.2025
(60) Divisional application: 25181114.7 / 4 588 752
(73) Proprietor: Wabtec Faiveley Nordic AB, 261 35 Landskrona (SE)
(72) Inventor: BLENNOW, Fredrik, 237 31 BJÄRRED (SE); VERNERSSON, Tore, 511 57 KINNA (SE); MOSSHEDEN, Kristoffer, 281 47 HÄSSLEHOLM (SE)
(74) Representative: Ström & Gulliksson AB

(56) References cited:
- EP-B1- 0 874 174
- EP-B1- 1 384 638
- EP-B1- 3 960 557
- DE-T5- 112020 006 928
- US-A1- 2020 384 974
- US-B2- 6 847 869

## Description

### Technical field

The present disclosure relates to a control system for a railway vehicle and a method for a railway vehicle. In particular, the present disclosure relates to measures for counteracting braking related damage for railway vehicles.

### Background

Braking systems in railway vehicles are subjected to high loads and wear. In order to ensure that the braking system and its components do not suffer too much damage and the safety and function of the railway vehicle is not negatively affected, a variety of systems and methods has been implemented in the past. Such control systems are associated with limitations preventing the optimal usage of the components.

US 6 847 869 B2 discloses a computer software program for indicating and controlling brake shoe and/or brake pad wear on an electronically controlled passenger transit vehicle.

EP 0 874 174 B1 discloses a method for monitoring the state of brake lining wear in friction brakes for rail vehicles with an electrically controlled brake valve.

US 2020/384974 A1 discloses a system for determining the actual wear experienced by brake equipment based on usage of the brake equipment.

DE 11 2020 006928 T5 discloses a wear estimation device with a state acquisition unit that acquires information regarding wear amounts of a plurality of mechanical brake devices that brake a vehicle and usage states of the plurality of mechanical brake devices.

Further, in some railway vehicle implementations such as electrically motorized railway vehicles, the railway vehicle may primarily be braked by means of motor braking. This new blending of brakes, e.g., the utilization of both a conventional braking system and motor braking, allows for monitoring and optimization of the braking system configuration.

The present inventors has realized that there is room for improvement in this field.

### Summary

According to an aspect a control system for a railway vehicle is provided. The control system is configured to obtain braking operational data associated with the operation of a braking system of the railway vehicle, determine based on the braking operational data the occurrence of a braking operation, in response to the determined occurrence of the braking operation, update a damage indicator counter based on the braking operational data and in response to the damage indicator counter exceeding a threshold counter value, provide control data for initiating a component damage countermeasure. This allows for monitoring of the status and health of the braking system and/or components of the railway vehicle in a simple, fast and efficient manner.

In one embodiment, the control system is further configured to in response to the determined occurrence of the braking operation, determine a damage indicator value associated with the braking operation based on the braking operational data, and update the damage indicator counter based on the damage indicator value. The damage indicator value enables a more accurate monitoring of the status and health of the braking system and/or components of the railway vehicle due to each braking operation being taken into account.

In one embodiment, the braking operational data comprises at least one of speed data associated with the travelling speed of the railway vehicle, braking force data associated with the braking force applied by the braking system of the railway vehicle, braking time data associated with the time the one or more brakes of the braking system will be applied during the braking operation, activation data associated with the activation of the one or more of the brakes of the braking system, distance data associated with the travelling distance travelled by the railway vehicle between occurred braking operations, load data associated with the axle load of the railway vehicle and retardation data associated with the retarding of the railway vehicle during the braking operation, wheel geometry data associated with the geometry of one or more of the wheels of the railway vehicle and temperature data associated with the temperature of a component associated with the braking operation.

In one embodiment, the damage indicator counter is associated with a determined obtained damage of a component associated with the braking system. Hence, the control system may allow for a more accurate way of tracking an accumulated damage of a component through a plurality of braking operations.

The control system may be further configured to obtain component data indicating that the component has been replaced or serviced, and in response to the component data, update the damage indicator counter. Hence, the control data provided by the control system and the determined damage indicator counter may be adapted to take into account a serviced or replaced component.

In an example, which is not covered by the claimed invention, the component is a brake friction member such as a brake pad, brake block or brake disc, an axle bearing or a braking cylinder of the railway vehicle.

According to the invention the component is a wheel and the damage indicator counter is associated with the accumulated damage of the wheel.

In an example, which is not covered by the claimed invention, the component is a brake friction member and the damage indicator counter is associated with the accumulated wear of the brake friction member.

In one embodiment, the control system is further configured to determine based on the braking operational data a temperature of the component, and update the damage indicator counter based on the temperature. By utilizing the temperature of the component, the damage of the component may be estimated in a relatively accurate manner without space consuming sensor equipment and extensive monitoring of a large number of other parameters.

The control system may be further configured to determine based on the braking operational data, an initial temperature of the component prior to the braking operation, determine based on the braking operational data at least one braking temperature of the component obtained during the braking operation, and update the damage indicator counter based on the initial temperature and the braking temperature. By utilizing multiple determined temperatures for the braking operation, the updating of the damage indicator counter may be more accurate.

In one embodiment, the temperature of the component is determined based on the speed data in combination with the braking force data, braking time data, retardation data and/or activation data. An advantage of this is that the speed data and the other mentioned data types are commonly available via a control system of the railway vehicle and/or a braking control system of the railway vehicle. The control system may thus be easily implemented in an existing railway vehicle without requiring the addition of further functionality.

In one embodiment, the temperature of the component is determined based on temperature data obtained by a sensor system of the railway vehicle. Compared to other types of sensors, temperature sensors are typically more cost-efficient and reliable, whereby a more cost-efficient and reliable implementation of the control system may be achieved.

In one embodiment, the braking operational data comprises subsequent braking operational data associated with the operation of the braking system of the railway vehicle after the occurrence of the braking operation. The damage obtained by the braking system and/or a component associated with the braking system from one braking operation may vary depending on how the railway vehicle is operated in the time after the braking operation. For example, if the railway vehicle is operated at a high speed after a braking operation, the temperature of a component may remain at a high level for a long time, causing damage to accumulate compared to if the railway vehicle is held at a standstill after the braking operation. The subsequent braking operational data thus allows for a more accurate monitoring of the health and status of the braking system and/or components associated with the braking system.

The braking operational data may comprise at least one of speed data associated with the travelling speed of the railway vehicle after the occurrence of the braking operation, braking force data associated with the braking force applied by the braking system of the railway vehicle after the occurrence of the braking operation, braking time data associated with the time the one or more brakes of the braking system will be applied after the occurrence of the braking operation, activation data associated with the activation of the one or more of the brakes of the braking system after the occurrence after the braking operation, distance data associated with the travelling distance travelled by the railway vehicle after the occurrence of the braking operation, retardation data associated with the retardation of the railway vehicle after the occurrence of the braking operation and temperature data associated with the temperature of a component associated with the braking operation after the occurrence of the braking operation.

In one embodiment, the braking operational data comprises prior braking operational data associated with the operation of the braking system of the railway vehicle prior to the occurrence of the braking operation. The damage obtained by the braking system and/or a component associated with the braking system from one braking operation may vary depending on how the railway vehicle is operated in the time prior to the braking operation. If there has been a large number of powerful braking operations prior, the damage obtained from the present braking operation will be larger compared to the braking operation being a first braking operation performed after a long standstill. The prior braking operational data thus allows for a more accurate monitoring of the health and status of the braking system and/or components associated with the braking system.

In one embodiment, the braking operational data comprises at least one of speed data associated with the travelling speed of the railway vehicle before the occurrence of the braking operation, braking force data associated with the braking force applied by the braking system of the railway vehicle before the occurrence of the braking operation, braking time data associated with the time the one or more brakes of the braking system will be applied before the occurrence of the braking operation, activation data associated with the activation of the one or more of the brakes of the braking system before the occurrence of the braking operation, distance data associated with the travelling distance travelled by the railway vehicle before the occurrence of the braking operation, retardation data associated with the retardation of the railway vehicle before the occurrence of the braking operation and temperature data associated with the temperature of a component associated with the braking operation before the occurrence of the braking operation.

In one embodiment, the control system is further configured to determine based on the braking operational data the occurrence of a performed braking operation. As the data will be based on a performed braking operation, the data may be more accurate.

In one embodiment, the control system is further configured to determine from the braking operational data the occurrence of a predicted braking operation for a route section ahead of the railway vehicle. By updating the damage indicator counter based on predicted braking operations, an operator may be alerted in advance in case a component will not be able to withstand a planned route, improving the safety of the railway vehicle.

In one embodiment, the component damage countermeasure comprises at least one of generating an alert to be presented by a user interface, causing the railway vehicle to operate at a limited speed and/or causing a stop of the railway vehicle.

The alert may comprise any one of an indication to replace a component of the railway vehicle, an indication to stop the railway vehicle, an indication to service the railway vehicle and/or a component of the railway vehicle.

According to an aspect, a braking arrangement for a railway vehicle is provided. The braking arrangement comprises a braking system and a control system according to any of the embodiments described herein.

According to an aspect, a damage monitoring system for a railway vehicle is provided. The damage monitoring system comprises the control system according to any of the embodiments described herein, wherein the control system is configured to be operatively connected to a railway vehicle control system of the railway vehicle.

According to an aspect, a railway vehicle is provided, the railway vehicle comprises the braking system and the control system according to any of the embodiments described herein.

According to an aspect a method for a railway vehicle is provided. The method comprises obtaining braking operational data associated with the operation of a braking system of the railway vehicle, determining based on the braking operational data the occurrence of a braking operation, in response to the determined occurrence of the braking operation, updating a damage indicator counter based on the braking operational data, and in response to the assigned damage indicator value exceeding a threshold counter value, provide control data for initiating a component damage countermeasure. This allows for monitoring of the status and health of the braking system and/or the components of the railway vehicle in a simple, fast and efficient manner.

In one embodiment, the method further comprises to in response to the determined occurrence of the braking operation, determine a damage indicator value associated with the braking operation based on the braking operational data and update the damage indicator counter based on the damage indicator value. Hence, a more accurate way of tracking an accumulated damage of the braking system or a component through a plurality of braking operations may be provided.

In one embodiment, the method further comprises to determine based on the braking operational data a temperature of a component of the railway vehicle associated with the braking operation; and update the damage indicator counter based on the temperature. By utilizing the temperature of the component, the damage of the component may be estimated in a relatively accurate manner without space consuming sensor equipment and extensive monitoring of a large number of other parameters.

Embodiments of the invention are defined by the appended dependent claims and are further explained in the detailed description section as well as in the drawings.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief description of drawings

Embodiments of the invention will be described in the following; reference being made to appended drawings which illustrate non-limiting examples of how the inventive concept can be reduced into practice.
Figure 1 depicts a schematic view of aspects of an example of a braking system and components associated with the braking system.
Figure 2 depicts a block diagram of a control system according to one embodiment.
Figure 3 depicts a block diagram of a control system according to one embodiment.
Figure 4a depicts a block diagram of the implementation of a control system according to a first example.
Figure 4b depicts a block diagram of the implementation of a control system according to a second example.
Figure 4c depicts a block diagram of the implementation of a control system according to a third example.
Figure 5 depicts a flow chart of the operation of the control system according to one embodiment.
Figure 6 depicts a flow chart of the operation of the control system according to one embodiment.
Figure 7 depicts a block diagram of the operation of the control system according to one embodiment.
Figure 8a depicts a flow chart of aspects of a control system according to one embodiment.
Figure 8b depicts a flow chart of aspects of the control system of Figure 8a.
Figure 8c depicts a schematic drawing of an example of a wheel of a railway vehicle.

### Detailed description

The present disclosure relates to railway vehicles, i.e. vehicles configured to travel on a rail, such as trains, locomotives, trolleys, etc.

Commonly, railway vehicles are equipped with braking systems for slowing down the railway vehicle either for performing a planned stop or an emergency stop. Due to the large mass of a railway vehicle and the often high speeds in which railway vehicles are operated, braking operations could inevitably lead to damages on both a component of the braking system itself and a component functionally related to the operation of the braking system.

As the skilled person certainly is well-aware, a large variety of braking systems may be available depending on the type of railway vehicle and application.

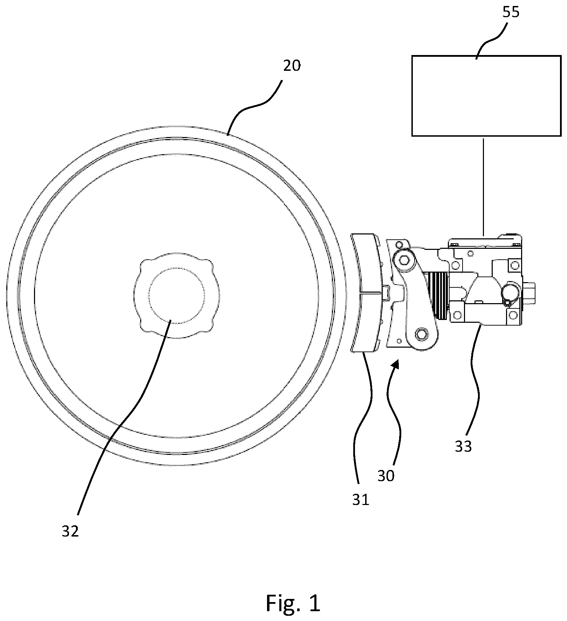

Figure 1 schematically depicts an exemplary braking system as well as components functionally related to the operation of the braking system. Braking systems are well-known in the prior art and the braking system 30 will therefore not be described in lengthy detail.

The braking system 30 is configured to decelerate the movement of a railway vehicle and/or maintain a steady movement of the railway vehicle for example by causing the railway vehicle to move at a constant speed and/or acceleration. The braking system 30 may comprise a brake friction member 31 arranged to upon engaging a corresponding braking element, brake the wheel 20 of the railway vehicle to decelerate the movement of said railway vehicle. The brake friction member 31 may be actuatable by means of a brake actuator or engageable by a corresponding brake friction member 31 actuatable by means of said brake actuator. Depending on the type of braking system, the actuator may be pneumatically, hydraulically or electrically operated or operated in any other plausible manner. In the depicted example, the brake actuator is in the form a braking cylinder, herein referenced as a braking cylinder 33. The braking cylinder 33 is configured to selectively cause the brake friction member 31 to brake against the wheel 20 to decelerate the movement of the railway vehicle.

The braking system 30 may be controlled by means of a braking system controller 55. Accordingly, the braking system controller 55 may be configured to control the braking system 30 and in particular the braking cylinder 33.

The railway vehicle may apart from the wheel 20 comprise other components functionally related to the operation of the braking system. For example, the railway vehicle may comprise an axle bearing 32. The axle bearing 32 is adapted to connect the wheel to an axle of the railway vehicle.

In the depicted example, the braking system 30 is a tread braking system. In a tread braking system, the brake friction member 31 directly engages the wheel 20 to decelerate the rotation of the wheel 20. In a tread braking system, the brake friction member 31 is in the form of a brake block (as depicted in Figure 1). The brake block is adapted to directly engage said wheel 20.

In an alternative example, the braking system may be a disc brake system. Such a system comprises other types of brake friction member(s). The disc brake system may comprise brake friction members in the form of a brake disc fixed relative to the wheel 20 and a brake pad actuatable by the braking cylinder 33 to selectively engage the brake disc to cause deceleration of the wheel 20. Accordingly, a disc brake system may comprise brake friction members in the form of a brake pad and a brake disc.

The aforementioned components, i.e. the brake friction member 31, the wheel 20, the axle bearing 32 and the braking cylinder 33 are all associated with the operation of the braking system 30, either by means of being comprised in the braking system 30 or being functionally linked to the braking system 30. Worded differently, the aforementioned components are all affected by the operation of the braking system. For example, each braking operation will affect and to some extent also cause damage to the wheel 20, the brake friction member 31, the axle bearing 32 and the braking cylinder 33 due to said components being subjected to loads and/or increased temperatures during each braking operation.

The present disclosure relates to a control system and method for monitoring damage on the braking system as a whole or components associated with the operation of the braking system 30. The components may be any of the components referenced in connection with Figure 1 or any other potential component associated with the operation of the braking system.

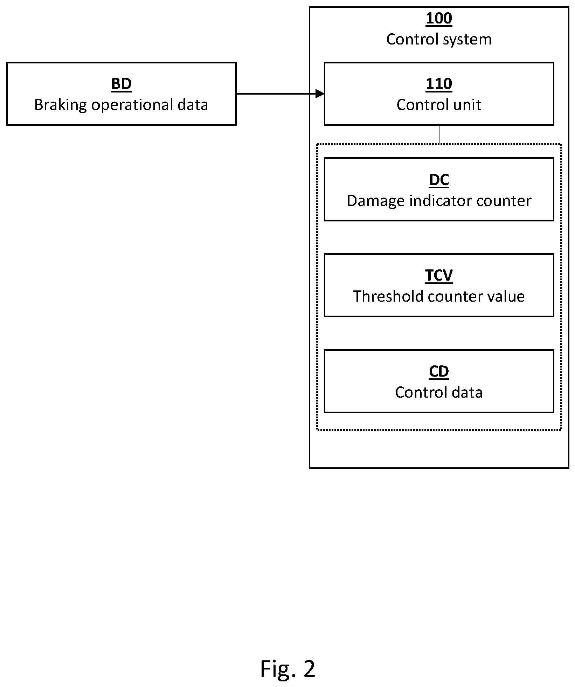

Figure 2 depicts a control system for a railway vehicle according to one embodiment. The control system may be for a railway vehicle comprising a braking system as described with reference to Figure 1.

The control system 100 is configured to obtain braking operational data BD. The braking operational data BD is associated with the operation of the braking system 30 of the railway vehicle. The control system 100 is configured to determine the occurrence of a braking operation.

In response to the determined occurrence of the braking operation, the control system 100 is configured to update a damage indicator counter DC based on the braking operational data BD.

In response to the damage indicator counter DC exceeding a threshold counter value TCV, the control system 100 is configured to provide control data CD for initiating a component damage countermeasure.

The control system 100 is thereby configured to for each braking operation update a variable, herein denoted as the damage indicator counter DC, based on the braking operational data BD. The damage indicator counter DC may thus be utilized to track accumulated damage on a component associated with the braking system or the braking system as a whole. Worded differently, the damage indicator counter DC may be associated with an accumulated damage obtained. The accumulated obtained damage is based on the braking operational data BD. The braking operational data BD comprises data including parameters relevant for the operation of the braking system 30. The braking operational data BD may comprise any type of data suitable for providing characteristics for a braking operation performed by the braking system 30.

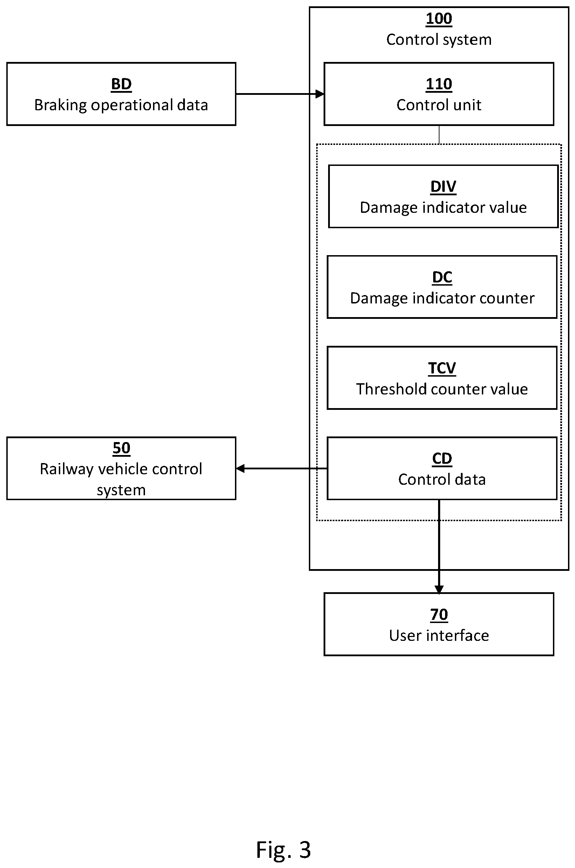

Figure 3 depicts a control system according to an embodiment. The control system 100 may incorporate all of the features described with reference to Figure 3.

The control system may be configured to in response to the determined occurrence of the braking operation, determine a damage indicator value DIV. The damage indicator value DIV may be associated with the braking operation. The damage indicator value DIV may be based on the braking operational data BD. The damage indicator counter DC may be updated based on the damage indicator value DIV.

Hence, for each braking operation, a damage indicator value DIV may be determined. The damage indicator value DIV may thus be associated with the damage obtained for the occurred braking operation.

To keep track of the accumulated damage, the damage indicator counter DC may be updated for each determined damage indicator value DIV. In one embodiment, the damage indicator counter DC may be provided as a sum of the determined damage indicator values DIV.

Notably, the damage obtained on the braking system or component associated with the operation of the braking system may depend on the characteristics of the braking operation as well as what occurs before and after the braking operation.

The damage indicator value DIV may thus be based on subsequent braking operational data associated with the operation of the braking system 30 of the railway vehicle after the occurrence of the braking operation, prior braking operational data associated with the operation of the braking system 30 of the railway vehicle prior to the occurrence of the braking operation and/or operation braking operational data associated with the operation of the braking system 30 during the braking operation. Thus, the braking operational data BD may comprise subsequent braking operational data, prior braking operational data and/or operation braking operational data.

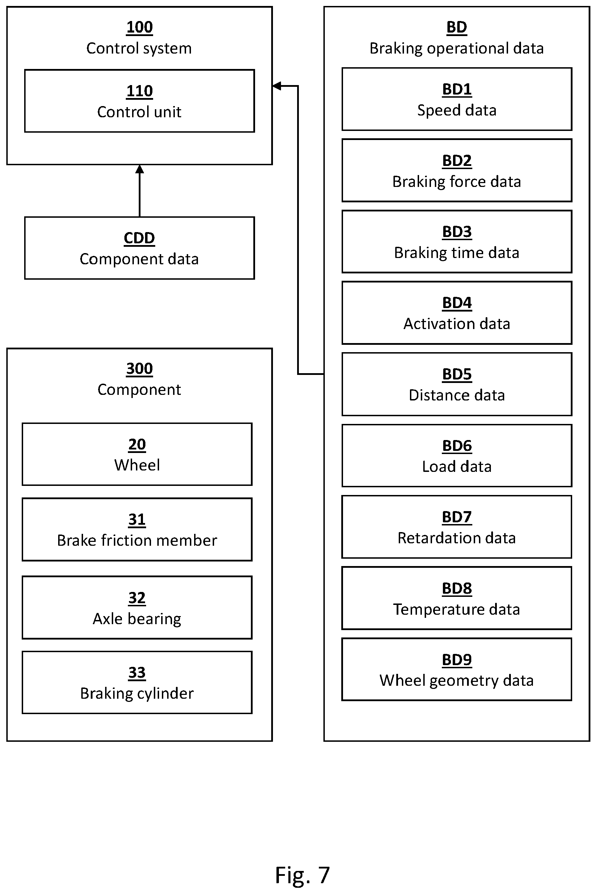

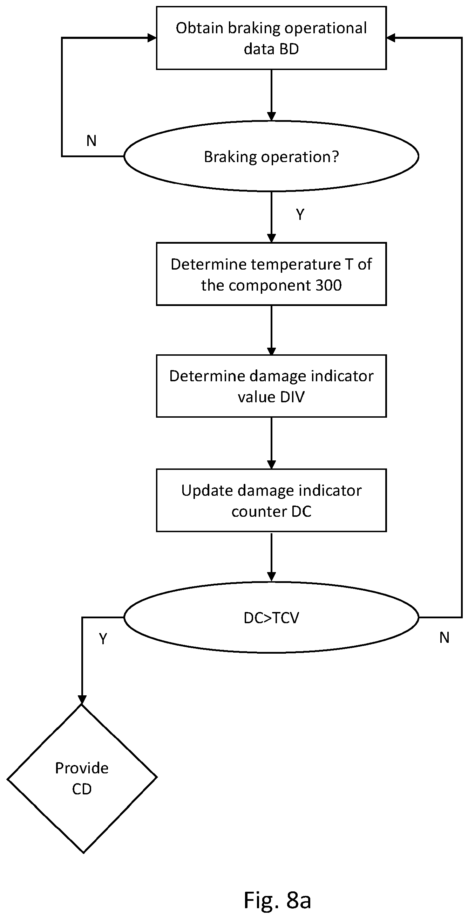

The braking operational data BD will be described further in Figure 7 and 8a-b.

As further depicted in Figure 3, the control system may be configured to issue the control data CD to a user interface 70 and/or a railway vehicle control system 50 of the railway vehicle. Accordingly, the control data CD may be configured to cause operation of the user interface 70 and/or the railway vehicle control system 50.

In one embodiment, the component damage countermeasure may comprise at least one generating alert to be presented by the user interface 70, causing the railway vehicle to operate at a limited speed and/or causing a stop of the railway vehicle.

For example, the alert may comprise any one of an indication to replace a component of the railway vehicle, an indication to stop the railway vehicle, an indication to service the railway vehicle and/or a component of the railway vehicle.

The user interface 70 may be comprised in the railway vehicle or alternatively be an external user interface operatively connected to the control system 100.

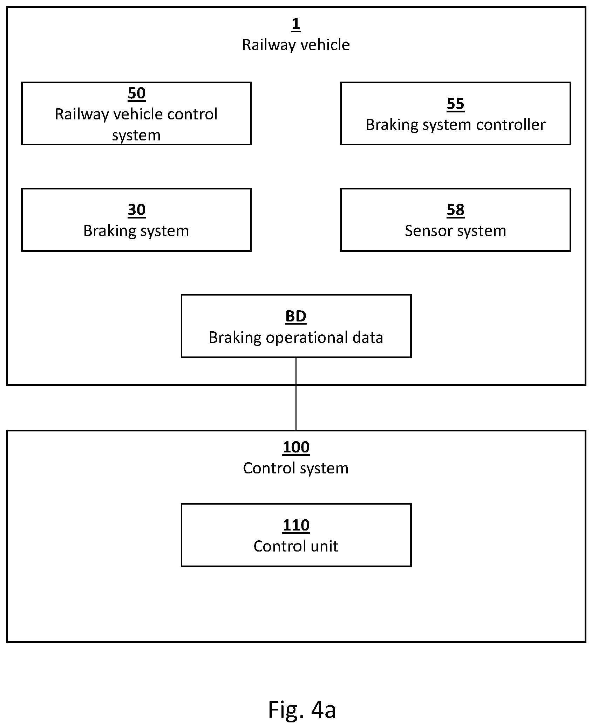

Figure 4a-c depicts examples of the implementation of the control system 100 for a railway vehicle 1.

Figure 4a depicts a schematic block diagram of a railway vehicle 1 and the control system 100 according to one embodiment. In the depicted embodiment, the control system 100 is operatively connected to railway vehicle 1 and configured to obtain the braking data BD from the railway vehicle 1. In the depicted example, the railway vehicle 1 comprises a railway vehicle control system 50 configured to control the operation of the railway vehicle 1 and a braking system controller 55 configured to control the operation of the braking system 30. In one embodiment, the railway vehicle control system 50 and the braking system controller 55 may be comprised in a railway vehicle control system, whereby the control system 100 may be configured to be operatively connected to said railway vehicle control system.

The railway vehicle 1 may comprise a sensor system 50. The sensor system 50 may be configured to monitor at least one parameter associated with the operation of the braking system 30. The sensor system 50 may be operatively connected to the braking system controller 55 and/or the railway vehicle control system 50.

The control system 100 may be configured to obtain the braking data BD from a plurality of sources of the railway vehicle 1. For example, the control system 100 may be configured to obtain braking data BD from the railway vehicle control system 50, the braking system controller 55 and/or the sensor system 58.

The control system 100 may be configured to be implemented on an external device, e.g. an external computing device. The control system 100 may thus be configured to externally obtain braking data BD and process said braking data BD externally from the railway vehicle 1. The provided control data CD may be transmitted to the railway vehicle 1, e.g. the railway vehicle control system 50 and/or a user interface.

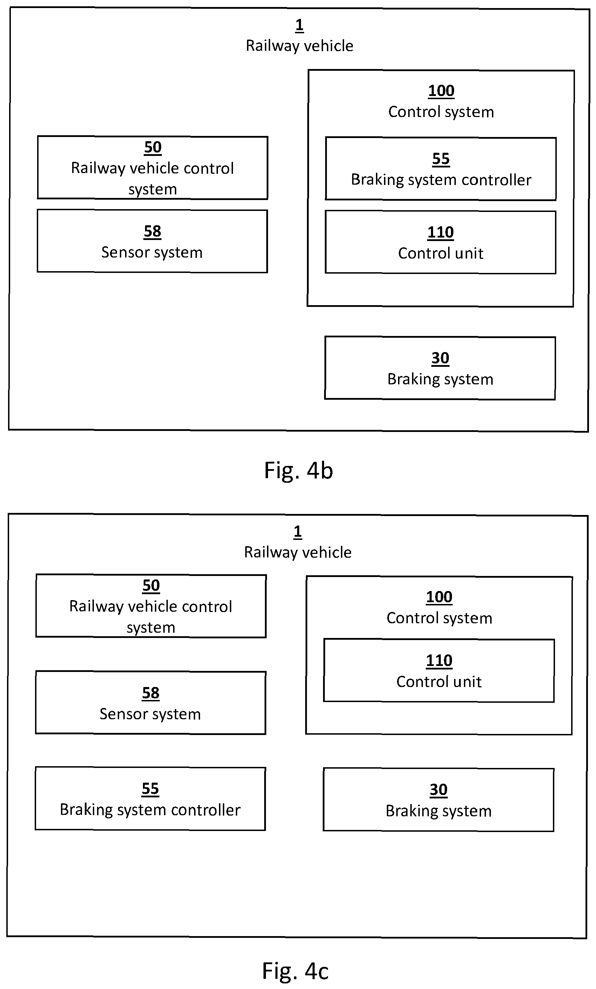

Figure 4b depicts a schematic block diagram of a railway vehicle 1 and the control system 100 according to another embodiment. In the depicted embodiment, the control system 100 is comprised in the railway vehicle 1. In the depicted embodiment, the control system 100 comprises the braking system controller 55. Thus, the control system 100 may be configured to cause control the braking system 30.

The control system 100 is operatively connected to the railway vehicle control system 50 and the braking system 30. The control system 100 is configured to obtain braking operational data BD from the braking system 30, the sensor system 58 and/or the railway vehicle control system 50.

The braking system 30 and the control system 100 may thus form a braking arrangement. Accordingly, a braking arrangement may be provided, the braking arrangement comprising the braking system 30 and the control system 100. The control system 100 may be configured to control the braking system 30.

Figure 4c depicts a schematic block diagram of a railway vehicle 1 and the control system 100 according to another embodiment. In the depicted embodiment, the control system 100 is comprised in the railway vehicle 1. In the depicted embodiment, the control system 100 is operatively connected to the braking system controller 55 and the railway vehicle control system 50.

The control system 100 is configured to obtain braking operational data BD from the railway vehicle control system 50, the braking system controller 55 and/or the sensor system 58.

In any of the embodiments described in Figure 4a-c, the control system 100 may be operatively connected to the railway vehicle control system 50 and/or other components such as the braking system 30, the braking system controller 55, the sensor system 58 and/or the user interface receiving the control data by wired connections, wireless connections or any combination thereof. The control system 100 may comprise a communication bus serving as a central unit for handling inputs and outputs of the control system 100. The communication bus may be configured to communicate via a wired connection and/or via short-range communication standards or long-range communication standards. Examples of such technologies are the short-range standards IEEE 802.11, IEEE 802.15, ZigBee, WirelessHART, WIFI and Bluetooth^{®} and the long-range standards W-CDMA/HSPA, GSM, UTRAN and LTE to name a few.

The data retrieved by the communication bus is subsequently transmitted to the control unit 110 of the control system 100, whereas the control unit 110 is configured to analyze the data received from the communications bus.

The control unit 110 comprises a programmable unit, preferably implemented by any commercially available CPU ("Central Processing Unit"), DSP ("Digital Signal Processor") or any other electronic programmable logic device. To be able to store application data and program instructions from software modules in the programmable unit, the control unit 110 may further comprise a memory, implemented using any commonly known technology for computer-readable memories such as ROM, RAM, SRAM, DRAM, CMOS, FLASH, DDR, SDRAM or some other memory technology.

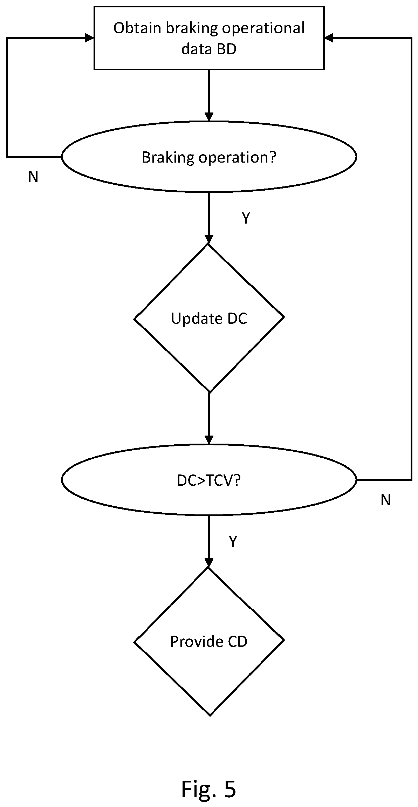

Figure 5 schematically depicts a flow chart of the operation of the control system 100 according to one embodiment.

The control system 100 obtains braking operational data BD. In the event of the braking data BD not indicating the occurrence of a braking operation, no action is performed. In the event of the braking data BD indicating the occurrence of a braking operation, the damage indicator counter DC is updated based on the braking operational data BD.

The control system 100 is further configured to compare the damage indicator counter DC, i.e. the updated damage indicator counter DC, with the threshold counter value TCV.

In response to the damage indicator counter DC, the control system 100 is configured to store the damage indicator counter DC, i.e. the updated damage indicator counter DC and no control data is provided. In response to the damage indicator counter DC exceeding the threshold counter value TCV, the control data system 100 is configured to provide the control data CD.

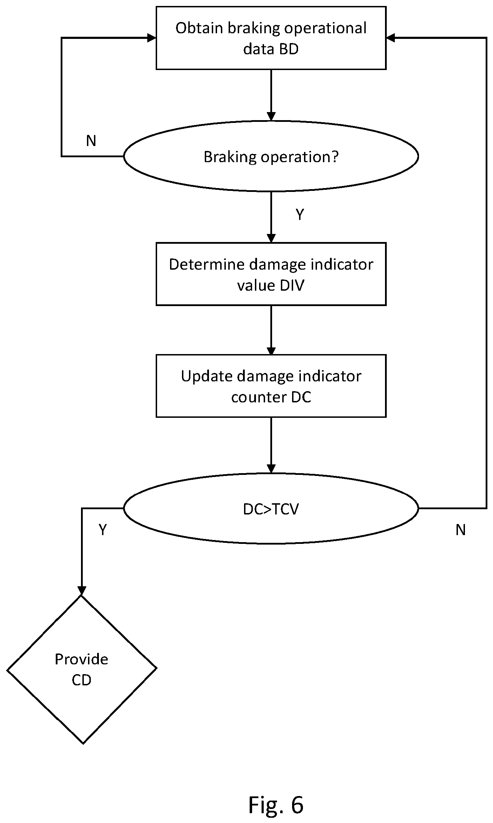

Figure 6 depicts schematically depicts a flow chart of the operation of the control system 100 according to another embodiment.

Referencing Figure 6, the control system 100 is configured to in response the determined occurrence of a braking operation determine a damage indicator value DIV. The damage indicator value DIV may be associated with the braking operation. Upon determining the damage indicator counter value DIV, the control system 100 may be configured to update the damage indicator counter DC based on said determined damage indicator value DIV.

Figure 7 schematically depicts the operation of the control system 100 according to an embodiment.

The damage indicator counter DC may be associated with a determined obtained damage of a component 300 associated with the braking system 30.

The component 300 may be a brake friction member 31 such as a brake pad, brake block or brake disc, an axle bearing, a wheel 20 or a braking cylinder 33 of the railway vehicle 1.

In one embodiment, the component 300 may be a wheel 20. The damage indicator counter DC may be associated with the accumulated damage of the wheel 20. Repeated braking operations will cause the wheel 20 and in particular the tread of the wheel 20 to heat up causing cracks and deformations of the wheel. By utilizing the control system, such unwanted damage may be monitored and counteracted.

In one embodiment, the component is a brake friction member 31 and the damage indicator counter DC may be associated with the accumulated wear of the brake friction member 31. Repeated braking operations will cause the material of the brake friction member 31 to wear down. By utilizing the control system, such unwanted damage may be monitored and counteracted.

The braking operational data BD may comprise at least one of speed data associated with the travelling speed of the railway vehicle 1, braking force data associated with the braking force applied by the braking system 30 of the railway vehicle 1, braking time data associated with the time the one or more brakes of the braking system 30 will be applied during the braking operation, activation data associated with the activation of the one or more of the brakes of the braking system 30, distance data associated with the travelling distance travelled by the railway vehicle 1 between occurred braking operations, load data associated with the axle load of the railway vehicle 1, retardation data associated with the retarding of the railway vehicle 1 during the braking operation, wheel geometry data associated with the geometry of one or more of the wheels 30 of the railway vehicle 1 and temperature data associated with the temperature of a component associated with the braking operation.

The braking operational data BD may comprise speed data BD1 associated with the travelling speed of the railway vehicle 1. The control system 100 may be configured to obtain the speed data BD1 from the sensor system 58 and/or the railway vehicle control system 50. The speed data BD1 may be sensor data and/or processed or calculated data.

The braking operational data BD may comprise braking force data BD2 associated with the braking force applied by the braking system 30 of the railway vehicle 1. The control system 100 may be configured to obtain the braking force data BD2 from the braking system 30 and/or the braking system controller 55. In one embodiment, the braking force data BD2 may be determined based on cylinder pressure data associated with the pressure in the braking cylinder 33 and the friction coefficient of the brake or the load data BD6 which will be described further below and the retardation data BD7 which will be described further below. The control system 100 may be configured to determine the braking force based on said data.

The braking operational data BD may comprise braking time data BD3 associated with the time the one or more brakes of the braking system 30 will be applied during the braking operation. The control system 100 may be configured to obtain the braking time data BD3 from the braking system 30 and/or the braking system controller 55.

The braking operational data BD may comprise activation data BD4 associated with the activation of the one or more of the brakes of the braking system 30. The control system 100 may be configured to obtain the activation data BD4 from the braking system 30 and/or the braking system controller 55.

The braking operational data BD may comprise distance data BD5 associated with the travelling distance travelled by the railway vehicle 1 between occurred braking operations. The control system 100 may be configured to obtain the distance data BD5 from the sensor system 58 and/or the railway vehicle control system 50. The distance data BD5 may be sensor data and/or processed or calculated data.

The braking operational data BD may comprise load data BD6 associated with the axle load of the railway vehicle 1. The control system 100 may be configured to obtain the load data BD6 from the sensor system 58 and/or the railway vehicle control system 50. The load data BD6 may be sensor data and/or processed or calculated data.

The braking operational data BD may comprise retardation data BD7 associated with the retarding of the railway vehicle 1 during the braking operation. The control system 100 may be configured to obtain the retardation data BD7 from the sensor system 58 and/or the railway vehicle control system 50. The retardation data BD7 may be sensor data and/or processed or calculated data.

The braking operational data BD may comprise temperature data BD8 associated with the temperature of a component associated with the braking operation. The component may be the component associated with the damage indicator counter DC. However, it may be envisioned that the temperature of another component associated with the braking operation may be utilized for updating the damage indicator counter DC. For example, the temperature of a brake friction member 31 may be utilized for updating a damage indicator counter associated with the damage obtained for the wheel 20 of the railway vehicle 1. As will be described further with reference to Figure 8a-b, the temperature data may be sensor data obtained from the sensor system 58.

The braking operational data BD may comprise wheel geometry data BD9 associated with the geometry of one or more of the wheels 30 of the railway vehicle 1.

Further referencing Figure 7, the control system 100 may be configured to obtain component data CDD. The component data CDD may provide indication that the component 300 has been replaced or serviced. In response to the component data CDD, the control system 100 may be configured to update the damage indicator counter DC.

In the event of the component 300 being serviced, the damage indicator counter DC may be updated to a value indicating a lesser accumulated damage.

In the event of the component 300 being replaced, the damage indicator counter DC may be updated to a value indicating no accumulated damage. Accordingly, in response to the component data CDD indicating that the component 300 has been replaced, the damage indicator counter DC may be reset.

In one embodiment, the component data CCD may be obtained from a user interface accessible for an operator. The operator may provide user input data indicating the replacement of the component, whereby the control system 100 is configured to obtain said user input data. The user input data may be provided via the user interface being operatively connected to the control system 100. In one embodiment, the user input data may be provided to a user interface operatively connected to the railway vehicle control system 50, whereby the control system 100 is configured to obtain the user input data via the railway vehicle control system 50. In one embodiment, the user interface is external relative the railway vehicle control system 50, whereby the user input data may be provided directly to the control system 100. For example, the user input data may be provided via a user interface of the external device on which the control system 100 is implemented.

In one embodiment, the component data CCD may be obtained by means of a computing device provided with component recognition functionality such that a new component or serviced component provided with an identifier may be recognized and the component data CCD may be generated. In one embodiment, the railway vehicle control system 50 may be provided with such component recognition functionality.

Figure 8a-b depicts aspects of a control system 100 wherein the temperature T of the component 300 is determined in order to monitor the damage obtained to said component 300.

Upon a braking operation occurring, the temperature T of the component 300 is determined. The control system 100 may be configured to determine the temperature T of the component 300 based on the braking operational data BD. The control system 100 may be configured to update the damage indicator counter DC based on the temperature T of the component 300.

Referencing Figure 8a, the control system 100 may be configured to determine the damage indicator value DIV based on the determined temperature T of the component 300. The damage indicator counter DC may then be updated based on the determined damage indicator value DIV.

The present inventors has realized that temperature may provide an efficient and precise indicator on the accumulated damage on a component associated with the operation of the braking system and/or the braking system as a whole. For example, for a tread braking system, during normal operation, the temperature of the brake friction member 31 and the temperature of the wheel 20, e.g. the tread of the wheel 20, may be below temperatures causing damage. During braking, the temperature of the wheel 20, e.g. the tread of the wheel, and the brake friction member 31 may reach temperatures impacting the wheel. At high temperatures, the material of the wheel 20 and/or the brake friction member 31 may begin to transform. For example, when the temperature reaches very high levels, the material could begin to form cracks and be subjected to wear. Hence, there is a direct correlation between the temperature of the component and the damage obtained. This is utilized in the present disclosure.

The temperature T may be determined based on sensor data and/or calculated data.

In one embodiment, the temperature data may be obtained by the sensor system 58 of the railway vehicle 1. The control system 100 may thus be configured to obtain said temperature data from said sensor system 58. The sensor system 58 may thus comprise one or more temperature sensors configured to monitor the temperature of the component 300. According to said embodiment, the braking operational data BD may comprise temperature data associated with the temperature of said component 300.

In one embodiment, the temperature T of the component 300 may be obtained by means of calculation of a temperature based on braking operational data BD obtained by the control system 100. Advantageously, the control system 100 may be configured to determine the temperature T of the component 300 based on braking operational data. Preferably, the control system 100 may be configured to determine the temperature T of the component 300 based on the speed data in combination with any one of the braking force data, the braking time data, the retardation data and/or the activation data. Accordingly, the braking operational data may comprise speed data and any one of braking force data, braking time data, retardation data and/or activation data

In one embodiment, the temperature T may be determined both based on the sensor data obtained by the sensor system 58 of the railway vehicle 1 and by means of calculation of a temperature based on braking operational data BD obtained by the control system 100. This allows for a "digital-twin" type of system with redundancy in case of the sensor system malfunctioning and/or the calculations are unreliable. Further, the sensor data may be utilized for improving the accuracy of the calculated data.

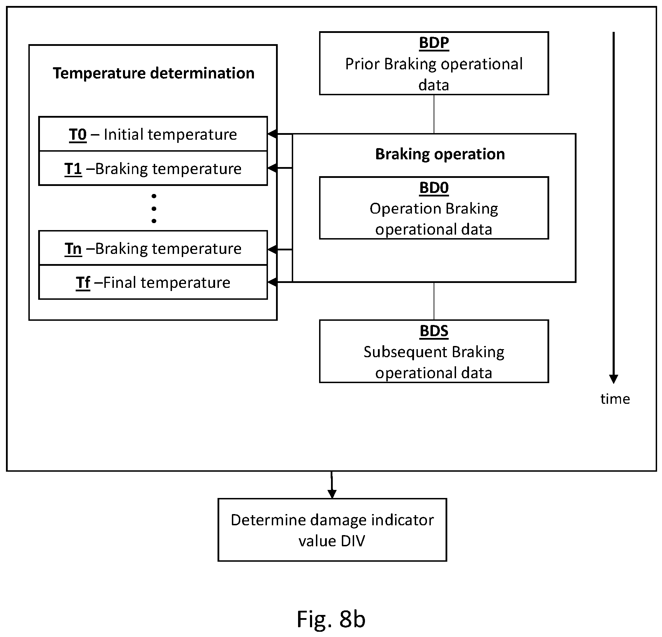

Figure 8b depicts an example of an implementation of how the damage indicator counter DC may be updated based on the temperature T of the component 300.

Referencing said Figure 8b, the control system 100 may be configured to determine an initial temperature T0 of the component 300 based on the braking operational data BD. The initial temperature T0 may be an initial temperature of the component 300 prior to the braking operation. The control system 100 may be further configured to at least one braking temperature T1 of the component 300 based on the braking operational data BD. The braking temperature T1 may be obtained during the braking operation. The control system 100 may be configured to update the damage indicator counter based on the initial temperature T0 and the at least one braking temperature T1.

In one embodiment, one of the at least one braking temperatures may be a maximum braking temperature of the component 300 obtained during the braking operation.

As depicted in Figure 8b, the control system 100 may be configured to determine a plurality of temperature data points T1... Tn corresponding to the determined temperature T of the component 300 during a set of corresponding instants of time during the braking operation.

In one embodiment, the control system 100 may be configured to determine an initial temperature T0 of the component 300 prior to the braking operation, a final temperature Tf of the component 300 after the braking operation and a plurality of temperature data points T1...Tn during the braking operation.

Based on the initial temperature and the at least one braking temperature and/or the final temperature Tf of the component 300, the damage indicator value DIV associated with the braking operation may be determined.

Notably, the damage obtained to the component 300 may be proportional to the temperature. Hence, if the determined temperature T is relatively low, the determined damage indicator value DIV may be determined to reflect this.

The damage indicator value DIV may be based on braking operational data BD. As depicted, the braking operational data BD may comprise operation braking operational data BD0 associated with the operation of the braking system 30 during the braking operation. In one embodiment, the braking operational data BD may comprise prior braking operational data BDP associated with the operation of the braking system 30 prior to the occurrence of the braking operation. In one embodiment, the braking operational data BD may comprise subsequent braking operational data associated with the operation of the braking system 30 after the occurrence of the braking operation.

The determined damage indicator value DIV may be thus be based on the operation braking operational data BD0 and the prior braking operational data BD0 and/or the subsequent braking operational data BDS.

The prior braking operational data BDP may comprise any relevant data for assessing the damage of the component 300. In the depicted example, the prior braking operational data BDP may comprise the data indicating the distance and/or time elapsed from a prior braking operation and/or number of braking operations previously being performed. For example, the damage indicator value may be increased in cases where multiple braking operations have been performed for a set distance or time period previously compared to cases where no braking operations have been performed for a set distance or time period prior to the braking operation.

The subsequent braking operational data BDS may comprise any relevant data for assessing the damage of the component 300. In the depicted example, the subsequent braking operational data BDS may comprise data indicating the distance and/or time until a subsequent braking operation and/or number of braking operations to be performed after the current braking operation for a set distance or time period. For example, the damage indicator value may be increased in cases where multiple braking operations have been performed for a set distance or time period after the current braking operation compared to cases where no braking operations have been performed for a set distance or time period after the current braking operation.

In one example, the braking system 30 may be a tread braking system and the component 300 may be a wheel 20. The control system may be configured to determine the temperature T of the wheel 20.

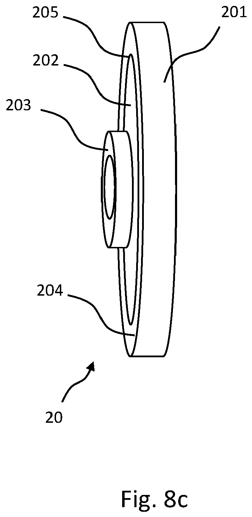

An example of a wheel 20 of a railway vehicle is schematically depicted in Figure 8c. The control system 100 may be configured to determine the temperature of a wheel such as the one depicted in Figure 8c.

The wheel 20 comprises a tread 201. The tread 201 forms the outer circumferential surface of the wheel 20. The tread 201 is adapted to engage the railway track. If a tread braking system is utilized, the brake friction member is actuated such that it engages the tread 201 for braking the railway vehicle. Preferably, the temperature T of the wheel 20 determined by the controls system 100 may be the temperature of the tread of the wheel 20, in particular for a railway vehicle with a tread braking system. For other types of braking systems or other embodiments of the present disclosure, it may be envisioned that other parts of the wheel 20 and/or the wheel 20 as a whole may be considered for the determining of the temperature T.

The wheel 20 further comprises a web 202 forming a radially extending surface of the wheel 20. A wheel hub 203 is provided on the web 202. The wheel hub 203 is adapted to be connected to the axle of the railway vehicle. Hence, the wheel 20 may be mounted to the axle of the railway vehicle via said wheel hub 203.

In the depicted example, the wheel further comprises a wheel rim 204 connected to the web 202 via a radially extending wheel flange 205. The wheel rim 204 envelops the web 202 thereby forming an annular section of the wheel 20. The wheel flange 205 protrudes axially such that the thickness, i.e. the axial thickness, of the wheel rim 204 is larger than the thickness, i.e. the axial thickness, of the web 202. The tread 201 may form an outer circumferential surface of the wheel rim 204.

According to the example, it has been determined that if the determined temperature T of the wheel 20 is over 450 °C, there is a risk for an increased degradation of the wheel 20. This is due to there often being hot spots on the wheel 20 having a temperature of up to 200 °C above the determined temperature T. The damage indicator value DIV may thus be determined based on the determined temperature T to reflect the risk for the increased degradation. In cases where the determined temperature T is at a more acceptable level, i.e. below a temperature where there is a risk for increased degradation, the damage indicator value DIV may be determined to reflect a lower obtained damage for the braking operation. In cases where the wheel 20 is allowed to cool after the braking operation and the maximum determined temperature T of the wheel 20 during the braking operation is within an acceptable level, it may even be envisioned that the damage indicator value is determined to reflect that no damage has occurred to the wheel 20.

It may be envisioned that the determined temperature T of the wheel may reach very high levels associated with unacceptable tread damage, for example due to an emergency braking operation. In such cases, the damage indicator value DIV may be determined accordingly. Hence, the damage indicator value DIV may be determined to reflect a high obtained damage for the braking operation. In such cases, upon updating of the damage indicator counter DC, the threshold counter value TCV may be immediately exceeded and control data CD provided accordingly.

According to an aspect, a braking arrangement for the railway vehicle 1 is provided. The braking arrangement comprises the braking system 30 and the control system 100 according to any of the embodiments described herein.

According to an aspect, a damage monitoring system for the railway vehicle 1 is provided. The damage monitoring system comprises the control system 100 according to any of the embodiments described herein. The control system 100 is configured to be operatively connected to the railway vehicle control system 50 of the railway vehicle 1.

According to an aspect a method for the railway vehicle 1 is provided. Advantageously, the method may be performed by the control system 100 according to any of the herein described embodiments. The method may be considered a method of operating a control system 100 for the railway vehicle 1.

The method comprises obtaining the braking operational data BD associated with the operation of the braking system 30 of the railway vehicle 1. The method comprises determining based on the braking operational data BD the occurrence of the braking operation.

In response to the determined occurrence of the braking operation, the damage indicator counter DC is updated based on the braking operational data.

In response to the assigned damage indicator value DC exceeding a threshold counter value TCV, control data CD is provided for initiating the component damage countermeasure.

In one embodiment, the method may further comprise to in response to the determined occurrence of the braking operation, determine the damage indicator value DIV associated with the braking operation based on the braking operational data BD and update the damage indicator counter DC based on the damage indicator value DIV.

In one embodiment, the method may further comprise determining based on the braking operational data BD, the temperature T of a component 300 of the railway vehicle associated with the braking operation and updating the damage indicator counter DC based on the temperature T.

It should be appreciated that even though numerous characteristics and advantages of the present invention have been set forth in the foregoing description, together with details of the structure and function of the invention, the description is only illustrative and changes may be made in detail, especially in matters of shape, size and arrangement of parts within the scope of the invention to the full extent indicated by the appended claims.

## Claims

1. A control system (100) for a railway vehicle (1), wherein the control system (100) is configured to:
- obtain braking operational data (BD) associated with the operation of a braking system (30) of the railway vehicle (1);
- determine based on the braking operational data (BD) the occurrence of a braking operation;
- in response to the determined occurrence of the braking operation, update a damage indicator counter (DC) based on the braking operational data (BD), and
- in response to the damage indicator counter (DC) exceeding a threshold counter value (TCV), provide control data (CD) for initiating a component damage countermeasure,
wherein the damage indicator counter (DC) is associated with a determined obtained damage of a component (300) associated with the braking system (30),
**characterised in that** the component (300) is a wheel (20) and the damage indicator counter (DC) is associated with the accumulated damage of the wheel (20).

2. The control system (100) according to claim 1, further configured to:
- in response to the determined occurrence of the braking operation, determine a damage indicator value (DIV) associated with the braking operation based on the braking operational data (BD), and
- update the damage indicator counter (DC) based on the damage indicator value (DIV).

3. The control system (100) according to claim 1 or 2, wherein the braking operational data comprises at least one of speed data associated with the travelling speed of the railway vehicle (1), braking force data associated with the braking force applied by the braking system (30) of the railway vehicle (1), braking time data associated with the time the one or more brakes of the braking system (30) will be applied during the braking operation, activation data associated with the activation of the one or more of the brakes of the braking system (30), distance data associated with the travelling distance travelled by the railway vehicle (1) between occurred braking operations, load data associated with the axle load of the railway vehicle (1), retardation data associated with the retarding of the railway vehicle (1) during the braking operation, wheel geometry data associated with the geometry of one or more of the wheels (20) of the railway vehicle (1) and temperature data associated with the temperature of a component (300) associated with the braking operation.

4. The control system (100) according to any one of the preceding claims, further configured to:
- determine based on the braking operational data (BD) a temperature (T) of the component (300); and
- update the damage indicator counter (DC) based on the temperature (T).

5. The control system (100) according to claim 4, wherein the temperature (T) of the component (300) is determined based on the speed data in combination with the braking force data, braking time data, retardation data and/or activation data.

6. The control system (100) according to any one of claim 4 or 5, wherein the temperature (T) of the component (300) is determined based on temperature data obtained by a sensor system (58) of the railway vehicle (1).

7. A braking arrangement for a railway vehicle (1) comprising a braking system (30) and a control system (100) according to any one of the preceding claims.

8. A damage monitoring system for a railway vehicle (1) comprising the control system (100) according to any one of claim 1 to 6, wherein the control system (100) is configured to be operatively connected to a railway vehicle control system (50) of the railway vehicle.

9. A method for a railway vehicle (1), the method comprising:
- obtaining braking operational data (BD) associated with the operation of a braking system (30) of the railway vehicle (1);
- determining based on the braking operational data (BD) the occurrence of a braking operation;
- in response to the determined occurrence of the braking operation, updating a damage indicator counter (DC) based on the braking operational data (BD); and
- in response to the assigned damage indicator counter (DC) exceeding a threshold counter value (TCV), provide control data (CD) for initiating a component damage countermeasure,
wherein the damage indicator counter (DC) is associated with a determined obtained damage of a component (300) associated with the braking system (30),
**characterised in that** the component (300) is a wheel (20) and the damage indicator counter (DC) is associated with the accumulated damage of the wheel (20).

10. The method according to claim 9, further comprising:
- in response to the determined occurrence of the braking operation, determining a damage indicator value (DIV) associated with the braking operation based on the braking operational data (BD),
- updating the damage indicator counter (DC) based on the damage indicator value (DIV).

11. The method according to claim 9 or 10, further comprising:
- determining based on the braking operational data (BD) a temperature (T) of a component (300) of the railway vehicle (1) associated with the braking operation; and
- updating the damage indicator counter (DC) based on the temperature (T).

## Patentansprüche

1. Steuersystem (100) für ein Schienenfahrzeug (1), wobei das Steuersystem (100) eingerichtet ist zum:
Erhalten von Bremsbetriebsdaten (BD), die mit dem Betrieb eines Bremssystems (30) des Schienenfahrzeugs (1) verknüpft sind;
Bestimmen des Eintretens eines Bremsvorgangs basierend auf den Bremsbetriebsdaten (BD);
Aktualisieren eines Schadensindikatorzählers (DC) basierend auf den Bremsbetriebsdaten (BD) als Reaktion auf das bestimmte Eintreten des Bremsvorgangs; und
Bereitstellen von Steuerdaten (CD) zum Einleiten einer Gegenmaßnahme gegen Komponentenschäden als Reaktion darauf, dass der Schadensindikatorzähler (DC) einen Zählerschwellenwert (TCV) überschreitet,
wobei der Schadensindikatorzähler (DC) mit einem bestimmten erhaltenen Schaden einer Komponente (300) verknüpft ist, die mit dem Bremssystem (30) verknüpft ist, und
**dadurch gekennzeichnet, dass**
die Komponente (300) ein Rad (20) ist und der Schadensindikatorzähler (DC) mit dem akkumulierten Schaden des Rades (20) verknüpft ist.

2. Steuersystem (100) nach Anspruch 1, ferner eingerichtet zum:
Bestimmen eines Schadensindikatorwertes (DIV), der mit dem Bremsvorgang verknüpft ist, basierend auf den Bremsbetriebsdaten (BD) als Reaktion auf das bestimmte Eintreten des Bremsvorgangs, und
Aktualisieren des Schadensindikatorzählers (DC) basierend auf dem Schadensindikatorwert (DIV).

3. Steuersystem (100) nach Anspruch 1 oder 2, wobei die Bremsbetriebsdaten mindestens eines der folgenden umfassen: Geschwindigkeitsdaten, die mit der Fahrgeschwindigkeit des Schienenfahrzeugs (1) verknüpft sind, Bremskraftdaten, die mit der durch das Bremssystem (30) des Schienenfahrzeugs (1) aufgebrachten Bremskraft verknüpft sind, Bremszeitdaten, die mit der Zeit verknüpft sind, während der die eine oder die mehreren Bremsen des Bremssystems (30) während des Bremsvorgangs betätigt werden, Aktivierungsdaten, die mit der Aktivierung der einen oder der mehreren Bremsen des Bremssystems (30) verknüpft sind, Distanzdaten, die mit der durch das Schienenfahrzeug (1) zwischen aufgetretenen Bremsvorgängen zurückgelegten Fahrstrecke verknüpft sind, Lastdaten, die mit der Achslast des Schienenfahrzeugs (1) verknüpft sind, Verzögerungsdaten, die mit der Verzögerung des Schienenfahrzeugs (1) während des Bremsvorgangs verknüpft sind, Radgeometriedaten, die mit der Geometrie eines oder mehrerer der Räder (20) des Schienenfahrzeugs (1) verknüpft sind, und Temperaturdaten, die mit der Temperatur einer mit dem Bremsvorgang verknüpften Komponente (300) verknüpft sind.

4. Steuersystem (100) nach einem der vorhergehenden Ansprüche, ferner eingerichtet zum:
Bestimmen einer Temperatur (T) der Komponente (300) basierend auf den Bremsbetriebsdaten (BD); und
Aktualisieren des Schadensindikatorzählers (DC) basierend auf der Temperatur.

5. Steuersystem (100) nach Anspruch 4, wobei die Temperatur (T) der Komponente (300) basierend auf den Geschwindigkeitsdaten in Kombination mit den Bremskraftdaten, Bremszeitdaten, Verzögerungsdaten und/oder Aktivierungsdaten bestimmt wird.

6. Steuersystem (100) nach einem der Ansprüche 4 oder 5, wobei die Temperatur (T) der Komponente (300) basierend auf Temperaturdaten bestimmt wird, die durch ein Sensorsystem (58) des Schienenfahrzeugs (1) erhalten werden.

7. Bremsanordnung für ein Schienenfahrzeug (1), umfassend ein Bremssystem (30) und ein Steuersystem (100) nach einem der vorhergehenden Ansprüche.

8. Schadensüberwachungssystem für ein Schienenfahrzeug (1), umfassend das Steuersystem (100) nach einem der Ansprüche 1 bis 6, wobei das Steuersystem (100) eingerichtet ist, um operativ mit einem Schienenfahrzeugsteuersystem (50) des Schienenfahrzeugs verbunden zu sein.

9. Verfahren für ein Schienenfahrzeug (1), wobei das Verfahren umfasst:
Erhalten von Bremsbetriebsdaten (BD), die mit dem Betrieb eines Bremssystems (30) des Schienenfahrzeugs (1) verknüpft sind;
Bestimmen des Eintretens eines Bremsvorgangs basierend auf den Bremsbetriebsdaten (BD);
Aktualisieren eines Schadensindikatorzählers (DC) basierend auf den Bremsbetriebsdaten (BD) als Reaktion auf das bestimmte Eintreten des Bremsvorgangs; und
Bereitstellen von Steuerdaten (CD) zum Einleiten einer Gegenmaßnahme gegen Komponentenschäden als Reaktion darauf, dass der Schadensindikatorzähler (DC) einen Zählerschwellenwert (TCV) überschreitet,
wobei der Schadensindikatorzähler (DC) mit einem bestimmten erhaltenen Schaden einer Komponente (300) verknüpft ist, die mit dem Bremssystem (30) verknüpft ist, und
**dadurch gekennzeichnet, dass**
die Komponente (300) ein Rad (20) ist und der Schadensindikatorzähler (DC) mit dem akkumulierten Schaden des Rades (20) verknüpft ist.

10. Verfahren nach Anspruch 9, ferner umfassend:
Bestimmen eines Schadensindikatorwertes (DIV), der mit dem Bremsvorgang verknüpft ist, basierend auf den Bremsbetriebsdaten (BD) als Reaktion auf das bestimmte Eintreten des Bremsvorgangs, und
Aktualisieren des Schadensindikatorzählers (DC) basierend auf dem Schadensindikatorwert (DIV).

11. Verfahren nach Anspruch 9 oder 10, ferner umfassend:
Bestimmen einer Temperatur (T) einer Komponente (300) des Schienenfahrzeugs (1), die mit dem Bremsvorgang verknüpft ist, basierend auf den Bremsbetriebsdaten (BD); und
Aktualisieren des Schadensindikatorzählers (DC) basierend auf der Temperatur (T).

## Revendications

1. Système de commande (100) pour un véhicule ferroviaire (1), ledit système de commande (100) étant configuré pour :
- obtenir des données de fonctionnement de freinage (BD) associées à l'opération d'un système de freinage (30) du véhicule ferroviaire (1) ;
- effectuer une détermination, sur la base des données de fonctionnement de freinage (BD), de la survenance d'une opération de freinage ;
- en réponse à la survenance déterminée de l'opération de freinage, effectuer une mise à jour d'un compteur d'indicateur de dommage (DC) sur la base des données de fonctionnement de freinage (BD), et
- en réponse au dépassement du compteur d'indicateur de dommage (DC) d'une valeur seuil du compteur (TCV), fournir des données de commande (CD) pour l'initiation d'une contre-mesure de dommage de composant,
dans lequel le compteur d'indicateur de dommage (DC) est associé à un dommage déterminé obtenu d'un composant (300) associé au système de freinage (30), et
**caractérisé en ce que** le composant (300) est une roue (20) et le compteur d'indicateur de dommage (DC) est associé au dommage accumulé de la roue (20).

2. Système de commande (100) selon la revendication 1, en outre configuré pour :
- en réponse à la survenance déterminée de l'opération de freinage, effectuer une détermination d'une valeur d'indicateur de dommage (DIV) associée à l'opération de freinage sur la base des données de fonctionnement de freinage (BD), et
- effectuer une mise à jour du compteur d'indicateur de dommage (DC) sur la base de la valeur d'indicateur de dommage (DIV).

3. Système de commande (100) selon l'une quelconque des revendications 1 ou 2, dans lequel les données de fonctionnement de freinage comprennent au moins l'une des données de vitesse associées à la vitesse de déplacement du véhicule ferroviaire (1), des données de force de freinage associées à la force de freinage appliquée par le système de freinage (30) du véhicule ferroviaire (1), des données de temps de freinage associées au temps pendant lequel un ou plusieurs freins du système de freinage (30) seront appliqués lors de l'opération de freinage, des données d'activation associées à l'activation de l'un ou plusieurs des freins du système de freinage (30), des données de distance associées à la distance de déplacement parcourue par le véhicule ferroviaire (1) entre des opérations de freinage survenues, des données de charge associées à la charge d'essieu du véhicule ferroviaire (1), des données de décélération associées à la décélération du véhicule ferroviaire (1) lors de l'opération de freinage, des données de géométrie de roue associées à la géométrie d'une ou plusieurs des roues (20) du véhicule ferroviaire (1) et des données de température associées à la température d'un composant (300) associé à l'opération de freinage.

4. Système de commande (100) selon l'une quelconque des revendications précédentes, en outre configuré pour :
- effectuer une détermination, sur la base des données de fonctionnement de freinage (BD), d'une température (T) du composant (300) ; et
- effectuer une mise à jour du compteur d'indicateur de dommage (DC) sur la base de la température (T).

5. Système de commande (100) selon la revendication 4, dans lequel la température (T) du composant (300) est déterminée sur la base des données de vitesse en combinaison avec les données de force de freinage, les données de temps de freinage, les données de décélération et/ou les données d'activation.

6. Système de commande (100) selon l'une quelconque des revendications 4 ou 5, dans lequel la température (T) du composant (300) est déterminée sur la base de données de température obtenues par un système de capteur (58) du véhicule ferroviaire (1).

7. Agencement de freinage pour un véhicule ferroviaire (1) comprenant un système de freinage (30) et un système de commande (100) selon l'une quelconque des revendications précédentes.

8. Système de surveillance de dommage pour un véhicule ferroviaire (1) comprenant le système de commande (100) selon l'une quelconque des revendications 1 à 6, ledit système de commande (100) étant configuré pour être connecté de manière fonctionnelle à un système de commande de véhicule ferroviaire (50) du véhicule ferroviaire.

9. Procédé pour un véhicule ferroviaire (1), ledit procédé comprenant :
- l'obtention de données de fonctionnement de freinage (BD) associées à l'opération d'un système de freinage (30) du véhicule ferroviaire (1) ;
- la détermination, sur la base des données de fonctionnement de freinage (BD), de la survenance d'une opération de freinage ;
- en réponse à la survenance déterminée de l'opération de freinage, la mise à jour d'un compteur d'indicateur de dommage (DC) sur la base des données de fonctionnement de freinage (BD) ; et
- en réponse au dépassement du compteur d'indicateur de dommage (DC) assigné d'une valeur seuil du compteur (TCV), la fourniture de données de commande (CD) pour l'initiation d'une contre-mesure de dommage de composant,
- le compteur d'indicateur de dommage (DC) étant associé à un dommage déterminé obtenu d'un composant (300) associé au système de freinage (30), et
**caractérisé en ce que** le composant (300) est une roue (20) et le compteur d'indicateur de dommage (DC) est associé au dommage accumulé de la roue (20).

10. Procédé selon la revendication 9, comprenant en outre :
- en réponse à la survenance déterminée de l'opération de freinage, la détermination d'une valeur d'indicateur de dommage (DIV) associée à l'opération de freinage sur la base des données de fonctionnement de freinage (BD),
- la mise à jour du compteur d'indicateur de dommage (DC) sur la base de la valeur d'indicateur de dommage (DIV).

11. Procédé selon l'une quelconque des revendications 9 ou 10, comprenant en outre :
- la détermination, sur la base des données de fonctionnement de freinage (BD), d'une température (T) d'un composant (300) du véhicule ferroviaire (1) associé à l'opération de freinage ; et
- la mise à jour du compteur d'indicateur de dommage (DC) sur la base de la température (T).
